# DEMANDE DE BREVET EUROPEEN

(11) **EP 2 431 724 A1**
(43) Date de publication de la demande: **21.03.2012**
(21) Numéro de dépôt: 11306164.2
(22) Date de dépôt: 16.09.2011
(51) Int. Cl.: G01M 3/26, B60S 5/06, H01M 10/42

(54) **Organe de châssis d'un véhicule automobile équipé d'un moyen d'étanchéité entourant une ouverture**

(30) Priorité: 21.09.2010 FR 1057575
(71) Demandeur: Renault S.A.S., 92100 Boulogne-Billancourt (FR)
(72) Inventeur: Ghesquiere, Hervé, 78170 La Celle Saint Cloud (FR)

(57) **Abrégé**

Organe de châssis (12) d'un véhicule automobile (11) équipé d'un moyen d'étanchéité coopérant avec un système de test du niveau d'étanchéité d'un assemblage d'un élément (16) à cet organe de châssis (12), l'élément obturant une ouverture (23) réalisée dans l'organe de châssis du véhicule automobile.

## Description

La présente invention se rapporte à un procédé de test du niveau d'étanchéité d'un assemblage d'un élément, en particulier d'une batterie, sur un organe de châssis d'un véhicule automobile, l'élément obturant une ouverture réalisée dans l'organe de châssis du véhicule automobile.

Certains véhicules automobiles, comme les véhicules électriques ou hybrides, comprennent une batterie d'alimentation d'un moteur électrique d'entraînement. Il peut se révéler intéressant d'échanger cette batterie, contre une nouvelle batterie remplie d'énergie, lorsque le niveau d'énergie de la première est faible. Ceci peut être fait dans une station similaire à une station service dans laquelle on peut remplir un réservoir d'essence d'un véhicule automobile.

On connaît du document US 5 612 606 une station d'échange de batterie électrique d'alimentation d'un moteur d'entraînement d'un véhicule électrique et un procédé pour réaliser un tel échange.

Pour un déploiement aisé des stations d'échange de batterie, il est nécessaire de rendre fiable et robuste le fonctionnement de ces stations.

Sur certains véhicules automobiles, il est prévu d'introduire la batterie par le dessous du véhicule. Ainsi, une ouverture est pratiquée dans le châssis du véhicule automobile, cette ouverture donnant accès à un coffre dans lequel est logée la batterie. Lorsque la batterie est mise en place, un élément de celle-ci referme l'ouverture. Compte tenu de la nature électrique de la batterie, il est important que l'élément refermant l'ouverture assure, avec le châssis du véhicule, un niveau d'étanchéité définie de sorte que, malgré des projections, de l'eau, de l'humidité ou des poussières ne puissent pas pénétrer dans le coffre. Pour atteindre ce but, il est prévu, entre l'élément et le châssis, un moyen d'étanchéité.

Comme expliqué précédemment, il est prévu que les batteries puissent être échangées automatiquement ou semi-automatiquement dans des stations. Dès lors, il est nécessaire de prévoir des procédures assurant qu'après mise en place d'une nouvelle batterie, l'ouverture est correctement obturée par un élément de batterie et avec un niveau d'étanchéité convenable. En effet, des moyens assurant cette étanchéité sont soumis à une usure au fil des montages et démontages.

Ainsi, le but de l'invention est de fournir un procédé de test du niveau d'étanchéité d'un assemblage d'une batterie à un véhicule remédiant aux inconvénients mentionnés précédemment et améliorant les procédés connus de l'art antérieur. En particulier, l'invention propose un procédé de test simple, fiable et robuste. L'invention concerne encore un système de test et un organe de châssis de véhicule automobile. L'invention concerne aussi une station de remplacement muni d'un tel système de test.

Le procédé selon l'invention permet de tester le niveau d'étanchéité d'un assemblage d'un élément à un organe de châssis d'un véhicule automobile, l'élément obturant une ouverture réalisée dans l'organe de châssis du véhicule automobile, caractérisé en ce qu'il comprend les étapes suivantes :
- réaliser une enceinte dont une paroi comprend l'élément et une partie de l'organe de châssis entourant cet élément,
- mettre en place une pression de gaz dans l'enceinte,
- mesurer une pression de gaz dans l'enceinte ou détecter une pression de gaz dans l'enceinte ou analyser une évolution temporelle de la pression de gaz dans l'enceinte.

L'étape « réaliser une enceinte dont une paroi comprend l'élément et une partie de l'organe de châssis entourant cet élément » peut comprendre :
- rapporter une contre-forme sous l'organe de châssis, cette contre-forme entourant l'élément,
- réaliser une étanchéité entre la contre-forme et l'organe de châssis.

L'étape de mise en place d'une pression de gaz dans l'enceinte peut comprendre une étape de fonctionnement d'une pompe modifiant la pression dans l'enceinte.

La pression absolue mise en place dans l'enceinte peut être supérieure à la pression atmosphérique ou inférieure à la pression atmosphérique, notamment supérieure à 1,5 bar ou inférieure à 0,5 bar.

Le niveau d'étanchéité de l'assemblage peut être considéré comme insuffisant si, après mise en place de la pression, on constate une variation de pression supérieure à un seuil d'évolution temporelle de la pression, par exemple 0,02 bar/s en valeur absolue.

Le procédé peut comprendre une étape de test mettant en oeuvre le procédé de test défini précédemment.

Selon l'invention, le système de test du niveau d'étanchéité d'un assemblage d'un élément à un organe de châssis d'un véhicule automobile, l'élément obturant une ouverture réalisée dans l'organe de châssis du véhicule automobile, est caractérisé en ce qu'il comprend des moyens matériels et/ou logiciels de mise en oeuvre du procédé de test défini précédemment.

Les moyens matériels peuvent comprendre :
- une contre-forme permettant de définir une enceinte avec l'organe de châssis,
- une pompe permettant de modifier la pression de gaz dans l'enceinte,
- un capteur de pression ou un détecteur de pression permettant respectivement de mesurer une pression de gaz dans l'enceinte ou de détecter une pression de gaz dans l'enceinte, et
- une unité de commande pilotant le fonctionnement de la pompe et/ou analysant des informations fournies par le capteur ou le détecteur de pression.

La contre-forme peut comprendre un moyen d'étanchéité comme un joint.

Selon l'invention, un organe de châssis d'un véhicule automobile comprend une ouverture d'accès à un logement de batterie d'alimentation d'un moteur électrique d'entraînement du véhicule automobile et un moyen d'étanchéité entourant cette ouverture, un élément d'étanchéité étant destiné à coopérer avec un système de test défini précédemment.

Selon l'invention, une station de remplacement d'une batterie d'alimentation d'un moteur d'entraînement d'un véhicule automobile comprend un système de test défini précédemment.

Le dessin annexé représente, à titre d'exemple, un mode de réalisation d'un système de test selon l'invention.

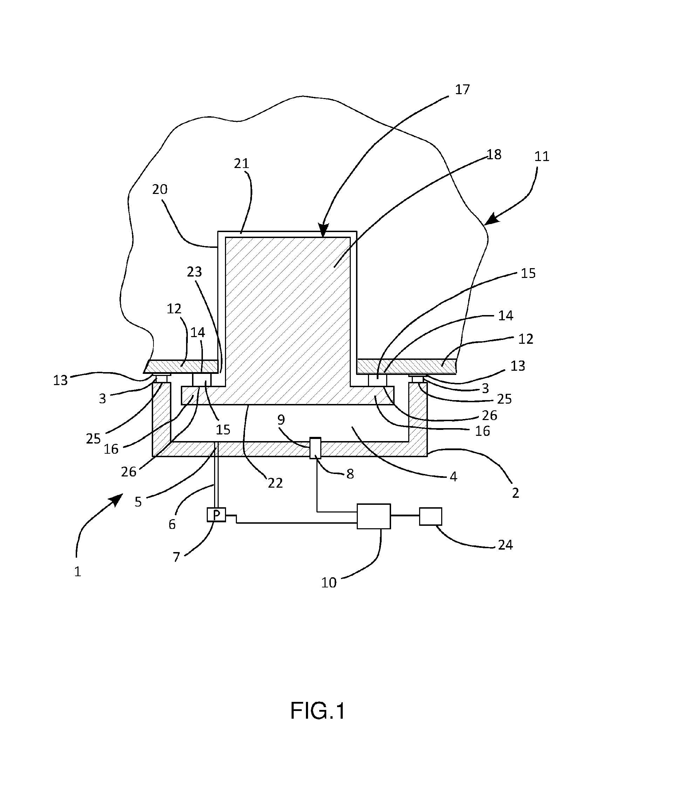

La figure 1 est une vue schématique d'un mode de réalisation d'un système de test un selon l'invention.

Un système 1 de test d'étanchéité d'assemblage est représenté à la figure 1 en position sous un véhicule automobile 11. Il est destiné à tester l'étanchéité d'assemblage d'un élément d'obturation d'une ouverture servant à accéder à un coffre dans lequel peut être logée une batterie électrique d'alimentation d'un moteur d'entraînement du véhicule automobile. En effet, compte tenu de la nature électrique de la batterie, il est important que la batterie soit assemblée au véhicule avec un niveau d'étanchéité suffisant pour que, malgré des projections, de l'eau, de l'humidité ou des poussières ne puissent pas pénétrer dans le coffre.

Pour atteindre ce but, le véhicule automobile est par exemple conçu comme décrit ci-après en référence à la figure 1. Le véhicule automobile comprend un organe de châssis 12, notamment un plancher, dans lequel est réalisée une ouverture 23. Cette ouverture permet l'accès à un coffre ou logement 21 réalisé au-dessus de l'organe de châssis et présentant un volume défini grâce à des parois 20. Ce coffre est destiné à recevoir la batterie 17 d'alimentation du moteur électrique d'entraînement du véhicule automobile. La batterie 17 comprend notamment un élément de stockage d'énergie électrique 18 et un élément 16 de fermeture ou d'obturation de l'ouverture 23. L'élément de fermeture ou d'obturation peut par exemple comprendre une plaque. L'assemblage au niveau de l'interface organe de châssis-élément d'obturation doit présenter un niveau d'étanchéité suffisant pour éviter l'introduction d'eau, d'humidité ou de poussières dans le coffre.

L'organe de châssis et l'élément d'obturation sont conformés pour atteindre ce but. L'organe de châssis présente un premier moyen d'étanchéité 14 et l'élément d'obturation présente un deuxième moyen d'étanchéité 26, les premier et deuxième moyens d'étanchéité étant destinés à coopérer l'un avec l'autre. Par exemple, les premier et deuxième moyens d'étanchéité sont des formes complémentaires coopérant au niveau de l'interface organe de châssis élément d'obturation. L'organe de châssis et l'élément d'obturation sont étudiés et présentent, au niveau de leur interface, des caractéristiques particulières de matériaux, d'état de surface et de forme.

Alternativement ou complémentairement, le premier et/ou le deuxième moyen d'étanchéité comprend un joint 15 (par exemple un joint en matériau souple comme un matériau élastomère) mis en place au niveau de cette interface. De préférence, les premier et deuxième moyens d'étanchéité comprennent des portées 14 et 26, par exemple des portées usinées, en vis-à-vis. De préférence, ces portées sont des portées pour le joint 15. Le joint peut être solidaire de l'organe de châssis ou de l'élément d'obturation.

Comme la batterie peut, lorsqu'elle est déchargée, être échangée contre une nouvelle batterie dans une station d'échange de manière automatique ou de manière semi automatique, il est important de prévoir une procédure permettant de tester le niveau d'étanchéité réalisé au niveau de l'interface organe de châssis-élément d'obturation après mise en place automatique de la nouvelle batterie.

Pour ce faire, on utilise le système de test 1 décrit ci-après en détail en référence à la figure 1. Le système de test comprend principalement une contre-forme 2 permettant de définir une enceinte avec l'organe de châssis et l'élément d'obturation, une pompe 7 permettant de modifier la pression de gaz dans l'enceinte, un capteur 8 de pression ou un détecteur de pression permettant respectivement de mesurer une pression de gaz dans l'enceinte ou de détecter une pression de gaz dans l'enceinte et une unité de commande 10 pilotant le fonctionnement de la pompe et/ou analysant des informations fournies par le capteur ou le détecteur de pression.

La contre-forme a globalement une forme de cloche. Elle est destinée à venir en appui étanche contre l'organe de châssis pour créer une enceinte dont une paroi est formée par l'élément d'obturation et une partie de l'organe de châssis entourant cet élément. Pour ce faire, l'organe de, châssis présente un troisième moyen d'étanchéité 13 et la contre-forme présente un quatrième moyen d'étanchéité 25, les troisième et quatrième moyens d'étanchéité étant destinés à coopérer l'un avec l'autre. Par exemple, les troisième et quatrième moyens d'étanchéité sont des formes complémentaires coopérant au niveau de l'interface organe de châssis - contre-forme. L'organe de châssis et la contre-forme sont étudiés et présentent, au niveau de leur interface, des caractéristiques particulières de matériaux, d'état de surface et de forme. Alternativement ou complémentairement, le troisième et/ou le quatrième moyen d'étanchéité comprend un joint 3 (par exemple un joint en matériau souple comme un élastomère) mis en place au niveau de cette interface. De préférence, les troisième et quatrième moyens d'étanchéité comprennent respectivement des portées 13 et 25, par exemple des portées usinées, en vis-à-vis. De préférence, ces portées sont des portées de joint 3. Le joint peut être solidaire de l'organe de châssis ou de la contre-forme.

La contre-forme présente un premier trou 5 relié à la pompe 7 grâce à une conduite 6. La pompe permet ainsi de mettre en place une pression de gaz dans l'enceinte 4, cette pression étant une surpression ou une dépression relativement à la pression atmosphérique. La pompe est, en outre, reliée à l'unité de commande 10 qui pilote son fonctionnement.

La contre-forme présente un deuxième trou 9 dans lequel est mis en place un capteur de pression 8 ou un détecteur de pression. Le capteur de pression ou le détecteur de pression est relié à l'unité de commande 10. Ainsi, les données de pression relevées dans l'enceinte peuvent être analysées par l'unité de commande.

L'unité de commande est également reliée à un moyen 24 permettant de gérer les cas où l'assemblage batterie-organe de châssis est insuffisamment étanche. Ce moyen 24 est par exemple un moyen de signalisation ou un moyen de commande d'un système de remplacement de batterie ayant permis la mise en place de la nouvelle batterie.

Un mode d'exécution du procédé de test selon l'invention est décrit ci-après. Un tel mode d'exécution du procédé de test est bien évidemment mis en oeuvre après mise en place de la nouvelle batterie sur le véhicule automobile.

Dans une première étape, on réalise l'enceinte 4. Pour ce faire, on met en place la contre-forme sous l'organe de châssis du véhicule automobile et on positionne celle-ci par rapport à l'organe de châssis de manière à réaliser une étanchéité à l'interface contre-forme- organe de châssis.

Dans une deuxième étape, on met en place une pression de gaz dans l'enceinte. Pour ce faire, on fait fonctionner la pompe de sorte à introduire du gaz dans l'enceinte 4 ou à retirer du gaz de l'enceinte 4 jusqu'à obtenir une pression désirée dans cette enceinte, par exemple une pression absolue de 1.5 bars ou 0.5 bars (la pression atmosphérique valant sensiblement 1 bar). Dans une première variante, on effectue plusieurs opérations de pompage successives jusqu'à obtenir une pression cible prédéfinie dans l'enceinte. Cette première variante nécessite des moyens de régulation de la pression. Dans une deuxième variante, on effectue une seule opération de pompage puis on détermine la pression obtenue dans l'enceinte à l'issue de l'opération. Cette deuxième variante est plus simple à mettre en oeuvre.

Dans une troisième étape, on analyse l'évolution temporelle de la pression de gaz dans l'enceinte. Cette analyse est par exemple réalisée dans l'unité de commande 10 grâce aux données de pression qu'elle reçoit du capteur de pression 8 ou du détecteur de pression. On remarque que la pression dans l'enceinte va naturellement évoluer vers la pression atmosphérique régnant à l'extérieur de l'enceinte du fait de fuites au niveau de l'interface organe de châssis-élément d'obturation et/ou de fuites au niveau de l'interface organe de châssis-contre-forme. Néanmoins, l'interface organe de châssis-contre-forme est conçue de sorte que le degré de fuites à ce niveau est faible, voire très faible, par rapport à celui qui est au maximum toléré au niveau de l'interface organe de châssis-élément d'obturation. Ainsi, il est possible de déterminer une évolution de pression limite au-delà de laquelle il est possible de déduire que l'étanchéité au niveau de l'assemblage élément d'obturation - organe de châssis est insuffisante. Par exemple, si on détecte une évolution temporelle de pression supérieure à un premier seuil, par exemple 0.02 bar/s en valeur absolue, on peut conclure que l'étanchéité de l'assemblage organe de châssis-élément d'obturation est insuffisante. L'évolution de la pression est négative ou positive, selon que la mise à pression initiale est respectivement une mise en surpression ou une mise en dépression.

De préférence, le système de test selon l'invention comprend tous les moyens matériels et/ou logiciels nécessaires à la mise en oeuvre du mode d'exécution du procédé de test selon l'invention. Notamment, il comprend un moyen de déplacement et de mise en position de la contre-forme par rapport à l'organe de châssis, le moyen étant par exemple commandé par l'unité de commande. L'unité de commande de commande comprend aussi des moyens d'analyse des données de pression, notamment des moyens de calculs.

Les moyens logiciels peuvent consister en des programmes informatiques.

## Revendications

1. Organe de châssis (12) d'un véhicule automobile (11), **caractérisé en ce qu'**il comprend une ouverture (23) réalisée dans l'organe de châssis et permettant l'accès à un logement (20) de batterie d'alimentation d'un moteur électrique d'entraînement du véhicule automobile (11), un élément (16) obturant l'ouverture (23) et un moyen d'étanchéité (13) entourant cette ouverture (23), un élément d'étanchéité étant destiné à coopérer avec un système (1) de test du niveau d'étanchéité de l'assemblage de l'élément (16) à l'organe de châssis (12), le système de test d'étanchéité comprenant des moyens matériels (2, 3, 6, 7, 8, 10, 24) et/ou logiciels de mise en oeuvre d'un procédé de test du niveau d'étanchéité, le procédé comprenant les étapes suivantes :
- réaliser une enceinte (4) dont une paroi comprend l'élément et une partie de l'organe de châssis entourant cet élément,
- mettre en place une pression de gaz dans l'enceinte,
- mesurer une pression de gaz dans l'enceinte ou détecter une pression de gaz dans l'enceinte ou analyser une évolution temporelle de la pression de gaz dans l'enceinte.

2. Organe de châssis (12) selon la revendication 1, **caractérisé en ce que** l'étape « réaliser une enceinte (4) dont une paroi comprend l'élément et une partie de l'organe de châssis entourant cet élément » comprend :
- rapporter une contre-forme (2) sous l'organe de châssis, cette contre-forme entourant l'élément,
- réaliser une étanchéité entre la contre-forme et l'organe de châssis.

3. Organe de châssis, (12) selon la revendication 1, **caractérisé en ce que** l'étape de mise en place d'une pression de gaz dans l'enceinte comprend une étape de fonctionnement d'une pompe modifiant la pression dans l'enceinte.

4. Organe de châssis (12) selon la revendication 1, **caractérisé en ce que** la pression absolue mise en place dans l'enceinte est supérieure à la pression atmosphérique ou inférieure à la pression atmosphérique, notamment supérieure à 1,5 bar ou inférieure à 0,5 bar.

5. Organe de châssis (12) selon la revendication 1, **caractérisé en ce que** le niveau d'étanchéité de l'assemblage est considéré comme insuffisant si, après mise en place de la pression, on constate une variation de pression supérieure à un seuil d'évolution temporelle de la pression, par exemple 0,02 bar/s en valeur absolue.

6. Organe de châssis (12) selon la revendication 1, **caractérisé en ce que** les moyens matériels comprennent :
- une contre-forme (2) permettant de définir une enceinte avec l'organe de châssis,
- une pompe (7) permettant de modifier la pression de gaz dans l'enceinte,
- un capteur (8) de pression ou un détecteur de pression permettant respectivement de mesurer une pression de gaz dans l'enceinte ou de détecter une pression de gaz dans l'enceinte, et
- une unité de commande (10) pilotant le fonctionnement de la pompe et/ou analysant des informations fournies par le capteur ou le détecteur de pression.

7. Organe de châssis (12) selon la revendication 6, **caractérisé en ce que** la contre-forme comprend un moyen d'étanchéité (3) comme un joint.
